# DEMANDE DE BREVET EUROPEEN

(11) **EP 2 161 476 A1**
(43) Date de publication de la demande: **10.03.2010**
(21) Numéro de dépôt: 09169491.9
(22) Date de dépôt: 04.09.2009
(51) Int. Cl.: F16H 3/00, F16H 3/12, F16H 61/04, F16H 3/091

(54) **Ensemble de transmission pour véhicule et procédé de contrôle correspondant**

(30) Priorité: 08.09.2008 FR 0855998
(71) Demandeur: Peugeot Citroën Automobiles SA, 78140 Vélizy-Villacoublay (FR)
(72) Inventeur: Le Dren, Arnaud, 91230, MONTGERON (FR); Py, Damien, 78180, MONTIGNY LE BRETONNEUX (FR)

(57) **Abrégé**

Ensemble de transmission pour véhicule par exemple automobile, comportant une boîte de vitesses pilotée (14), comprenant deux arbres primaires (36,38) pouvant chacun être accouplé à un moteur (12) par l'intermédiaire d'un double embrayage (16), un arbre secondaire (58) et une pluralité de paires de pignons engrenés (42,62;44,64;51,61;53,63;55,65) déterminant chacune un rapport de démultiplication de marche avant et comportant chacune un premier pignon (42,44,51,53,55) solidaire de l'un des arbres primaire (36,38) et un deuxième pignon (61,62,63,64,65) monté fou à rotation sur l'arbre secondaire (58), au moins un manchon à crabots (67,68,69), un carter supportant les arbres à rotation et un frein (70;110) qui est interposé entre le carter et les arbres primaires (36,38) et qui peut occuper une position neutre et deux positions actives dans chacune desquelles le frein (70;110) accouple l'un des arbres primaires (36,38) au carter en freinant l'arbre primaire afin de permettre un crabotage des deuxièmes pignons avec leur manchon.

## Description

La présente invention est relative aux boîtes de vitesses pilotées pour véhicule. Elle concerne aussi un procédé de pilotage d'une telle boîte.

Dans de telles boîtes de vitesses, une pluralité de paires de pignons engrenés déterminent chacune un rapport de démultiplication de marche avant et comportent chacune un premier pignon solidaire d'un arbre et un deuxième pignon monté fou à rotation sur un autre arbre. Dans une telle boîte, au moins un manchon à crabots est alternativement en position accouplée pour lier en rotation un des deuxièmes pignons et son arbre et en position découplée libre en rotation par rapport au deuxième pignon. Ces manchons à crabots sont typiquement intégrés à des synchroniseurs par friction qui permettent d'ajuster les vitesses de rotation du pignon fou et de l'arbre afin de permettre le crabotage sans choc. De tels synchroniseurs sont coûteux, volumineux, s'usent et ralentissent les changements de rapports.

Dans le cas d'un ensemble de transmission comprenant une boîte de vitesses ayant deux arbres primaires et un double embrayage pourvu d'un premier embrayage pouvant accoupler l'un des arbres primaires à un moteur et pourvu d'un deuxième embrayage pouvant accoupler l'autre des arbres primaires au moteur, de tels synchroniseurs par friction sont éprouvés par le couple de traînée du double embrayage et sont donc d'autant plus volumineux et chers qu'ils doivent être robustes.

La présente invention a notamment pour but de remédier aux inconvénients de l'art antérieur.

A cet effet, l'invention a pour objet une boîte de vitesses pilotée pour véhicule, notamment pour véhicule automobile, caractérisée en ce qu'elle comprend deux arbres primaires pouvant chacun être accouplé à un moteur par l'intermédiaire d'un double embrayage pourvu d'un premier embrayage pouvant accoupler l'un des arbres primaires au moteur et d'un deuxième embrayage pouvant accoupler l'autre des arbres primaires au moteur, un arbre secondaire prévu pour être lié à rotation à au moins une roue motrice du véhicule et une pluralité de paires de pignons engrenés déterminant chacune un rapport de démultiplication de marche avant et comportant chacune un premier pignon solidaire de l'un des arbres primaire et un deuxième pignon monté fou à rotation sur l'arbre secondaire, au moins un manchon à crabots alternativement en position accouplée en liant en rotation un des deuxièmes pignons et son arbre et en position découplée libre en rotation par rapport au deuxième pignon, un carter supportant les arbres à rotation et un frein qui est interposé entre le carter et les arbres primaires et qui peut occuper une position neutre dans laquelle un élément de friction du frein relié au carter est libre en rotation par rapport aux arbres primaires et deux positions actives dans chacune desquelles le frein accouple l'un des arbres primaires au carter en freinant l'arbre primaire quand la vitesse de rotation de ce dernier doit être abaissée jusqu'à atteindre un régime cible de synchronisation pour synchroniser les vitesses de rotation de l'arbre primaire et de l'arbre secondaire d'un rapport à engager et permettre le passage du manchon à crabots de sa position découplée à sa position accouplée en ajustant la vitesse de rotation du deuxième pignon du rapport à engager et la vitesse de rotation du manchon à crabots à accoupler.

Dans divers modes de réalisation de la boîte de vitesses selon l'invention, on peut éventuellement avoir recours en outre à l'une et/ou à l'autre des dispositions suivante :
- l'élément de friction est relié au carter par l'intermédiaire d'un actionneur à trois positions et en ce que le frein comprend un organe de friction solidaire de chacun des arbres primaires, l'actionneur positionnant l'élément de friction libre en rotation par rapport aux organes de friction en position neutre du frein et positionnant l'élément de friction en contact de l'un des organes de friction dans chacune des positions actives du frein ;
- l'un des arbres primaires est associé aux pignons des rapports pairs de la boîte de vitesses et l'autre des arbres primaires est associé aux pignons des rapports impairs de la boîte de vitesses.

Par ailleurs, l'invention a également pour objet un ensemble de transmission pour véhicule, notamment pour véhicule automobile, comportant une boîte de vitesses et un embrayage, **caractérisé en ce que** la boîte de vitesses est conforme à l'invention et en ce que l'embrayage est un double embrayage pourvu d'un premier embrayage pouvant dans une position fermée accoupler l'un des arbres primaires à un moteur et d'un second embrayage pouvant dans une position fermée accoupler l'autre des arbres primaires au moteur, chacun des embrayages pouvant dans une position ouverte découpler le moteur et l'arbre primaire qui lui est associé, pouvant occuper une position de frottement dans laquelle l'embrayage est partiellement fermé et pouvant être à un même instant dans une position différente de celle l'autre des embrayages.

Par ailleurs, l'invention a également pour objet un groupe motopropulseur pour véhicule, notamment pour véhicule automobile, comportant un moteur, **caractérisé en ce qu**'il comporte un ensemble de transmission selon l'invention dans lequel chaque embrayage du double embrayage peut être dans sa position fermée dans laquelle la vitesse de rotation d'un disque de l'embrayage est identique au régime du moteur, peut être dans sa position ouverte en rendant la rotation du disque de l'embrayage indépendante du régime du moteur et peut être dans sa position de frottement permettant une variation de la vitesse de rotation du disque de l'embrayage et de l'arbre primaire associé à l'embrayage en fonction du régime moteur alors que les manchons à crabots des deuxièmes pignons engrenés avec les premiers pignons dudit arbre primaire sont en position découplée.

Par ailleurs, l'invention a également pour objet un procédé de contrôle d'un groupe motopropulseur selon l'invention, dans lequel une opération de synchronisation est effectuée lors d'un changement de rapport de démultiplication en ajustant la vitesse de rotation de l'arbre primaire portant le premier pignon de la paire de pignons du rapport à engager afin que la vitesse de rotation du deuxième pignon du rapport à engager corresponde avec la vitesse de rotation du manchon à crabots du rapport à engager, le procédé comportant :
- une étape de détermination d'un régime cible de l'arbre primaire portant le premier pignon de la paire de pignon du rapport à engager compte tenu de la vitesse du véhicule et de la démultiplication de la paire de pignons du rapport à engager,
- une étape de freinage dans laquelle, si le régime initial de l'arbre primaire portant le premier pignon de la paire de pignon du rapport à engager est supérieur au régime cible, l'arbre primaire portant le premier pignon de la paire de pignon du rapport à engager est freiné jusqu'au régime cible par la mise en position active du frein en accouplant ledit arbre primaire avec le carter de la boîte de vitesses alors que l'embrayage associé audit arbre primaire est ouvert,
- après le crabotage, une étape dans laquelle l'embrayage associé à l'arbre primaire portant le premier pignon de la paire de pignon du rapport initial est ouvert et l'embrayage associé à l'arbre primaire portant le premier pignon du rapport à engager est fermé,
- une étape de frottement d'embrayage dans laquelle, si le régime initial de l'arbre primaire portant le premier pignon de la paire de pignon du rapport à engager est inférieur au régime cible, l'embrayage associé à l'arbre primaire portant le premier pignon de la paire de pignon du rapport à engager est mis en position de frottement jusqu'à ce que ledit arbre primaire atteigne le régime cible, alors que le frein est inactif.

Dans un mode de réalisation, le procédé selon l'invention comporte une étape de crabotage direct du manchon à crabots et du deuxième pignon du rapport à engager si le régime initial de l'arbre primaire portant le premier pignon de la paire de pignon du rapport à engager est sensiblement égal au régime cible, alors que l'embrayage associé à l'arbre primaire portant le premier pignon de la paire de pignon du rapport initial est fermé, que le frein est inactif et que l'embrayage associé à l'arbre primaire portant le premier pignon du rapport à engager est ouvert.

Dans un mode de réalisation, le procédé selon l'invention comporte un crabotage du manchon et du deuxième pignon du rapport à engager à la fin de l'étape de freinage et à la fin de l'étape de frottement d'embrayage.

Lors de l'étape de frottement dans le cas d'un changement de rapport consistant en un passage d'un rapport supérieur à un rapport inférieur, le procédé selon l'invention comporte une accélération du régime du moteur.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est un schéma de principe d'un groupe motopropulseur de véhicule selon un mode de réalisation de l'invention ;
- la figure 2 est un schéma de principe d'une variante d'un frein faisant partie d'une boîte de vitesses du type de celle du groupe motopropulseur de la figure 1 ;
- les figures 3 à 5 sont des vues d'un actionneur du frein de boîte de vitesses selon l'invention ;
- les figures 6 et 7 sont des diagrammes de fonctionnement de la boîte de vitesses selon l'invention et de son double embrayage.

Sur les différentes figures, les mêmes références désignent des éléments identiques ou similaires.

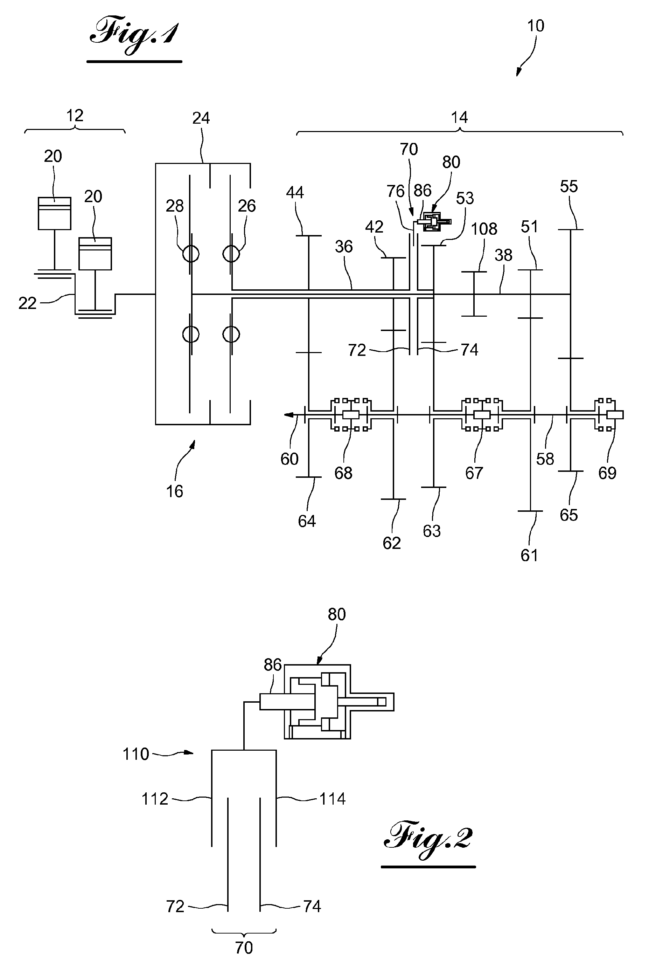

Un véhicule automobile comporte généralement un groupe motopropulseur 10 comportant un moteur 12 et une boîte de vitesses 14 pouvant être accouplés par un embrayage 16. Dans le moteur 12, les pistons 20, le vilebrequin 22 et le volant moteur 24 sont schématisés à la figure 1.

Dans le mode de réalisation de l'invention représenté à la figure 1, l'embrayage 16 est un double embrayage pourvu de deux embrayages 26 et 28 ayant chacun un disque pouvant être embrayé en étant fermé sur une portée annulaire appartenant à une pièce 24 solidaire du volant moteur entraîné à rotation par le vilebrequin 22.

La boîte de vitesses 14 comporte deux arbres primaires 36 et 38 respectivement liés à rotation aux embrayages 26 et 28.

Le premier arbre primaire 36 porte un pignon 42 du deuxième rapport de boîte et un pignon 44 du quatrième rapport de boîte, c'est-à-dire les pignons des rapports pairs de la boîte de vitesses 14.

Le second arbre primaire 38 porte un pignon 51 du premier rapport de boîte, un pignon 53 du troisième rapport de boîte et un pignon 55 du cinquième rapport de boîte, c'est-à-dire les pignons des rapports impairs de la boîte de vitesses 14.

La boîte de vitesses 14 comporte un arbre secondaire 58 relié à rotation à des roues motrices du véhicule par une extrémité d'arbre de sortie de boîte 60 et solidaire d'au moins un élément d'un différentiel non représenté.

L'arbre secondaire 58 porte les pignons fous de la boîte de vitesses engrenés avec les pignons 42, 44, 51, 53 et 55 portés par les arbres primaires 36 et 38, à savoir les pignons 61, 62, 63, 64 et 65 appartenant respectivement à la paire de pignons des premier, deuxième, troisième, quatrième et cinquième rapports de la boîte de vitesses.

L'arbre secondaire 58 porte à coulissement axial des manchons à crabots. Un manchon à crabots 67 est disposé entre les pignons fous 61 et 63 respectivement des premier et troisième rapports pour être accouplé à ces derniers afin de transmettre un couple de l'arbre secondaire 58 vers lesdits pignons fous quand lesdits rapports sont engagés. Dans le même but, un manchon à crabots 68 est disposé entre les pignons fous 62 et 64 respectivement des deuxième et quatrième rapports. De manière analogue, un manchon à crabots 69 est associé au pignon fou 65 du cinquième rapport.

Les manchons à crabots 67, 68 et 69 n'appartiennent pas à des synchroniseurs à friction, de sorte que lors des changements de rapport, la synchronisation de la rotation de l'arbre secondaire portant les manchons à crabots 67, 68, 69 avec la rotation des pignons fous 61, 63, 62, 64 et 65 engrenés respectivement avec les pignons 51, 53, 42, 44 et 55 solidaires des arbres primaires doit être effectuée autrement qu'en faisant classiquement frotter des éléments de friction dans un synchroniseur à friction.

La synchronisation lors des changements de rapport est effectuée en utilisant les embrayages 26 et 28 du double embrayage 16 et un frein 70 qui est interposé entre un carter de la boîte de vitesses 14 et les arbres primaires 36 et 38.

Dans le mode de réalisation de la figure 1, le frein 70 comporte un disque axialement fixe 72 solidaire du premier arbre primaire 36 et un disque axialement fixe 74 solidaire du second arbre primaire 38. Un disque axialement mobile 76 peut se déplacer coaxialement aux arbres primaires 36 et 38, ce déplacement s'effectuant du disque fixe 72 au disque fixe 74.

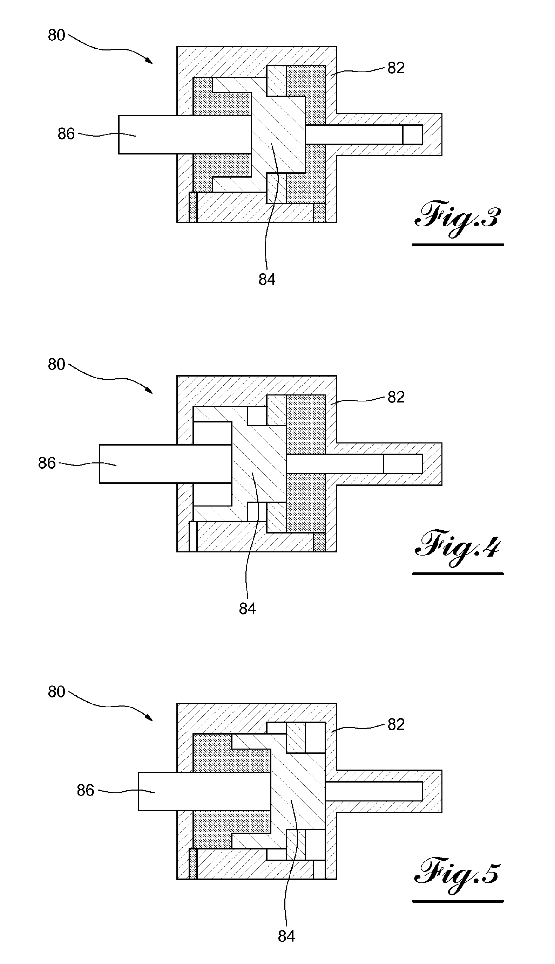

Le disque axialement mobile 76 coulisse par rapport au carter de la boîte de vitesses et est fixe à rotation par rapport audit carter. Il est monté sur le carter par l'intermédiaire d'un actionneur 80 à trois positions (figures 3 à 5).

Un tel actionneur 80 du frein 70, par exemple de type hydraulique, comporte un corps 82 dans lequel un piston 84 fait coulisser une tige d'actionnement 86 qui est solidaire du disque axialement mobile 76. L'actionneur 80 est commandé par un distributeur monostable à commande électromagnétique de type connu sans les trois positions suivante :
- une position neutre (figure 3) dans laquelle la pression hydraulique dans le corps est équilibrée sur les deux faces du piston 84 de manière que le disque axialement mobile 76 soit en position neutre entre les deux disques fixes 72 et 74 solidaires des arbres primaires 36 et 38 ;
- une première position active (figure 4) dans laquelle la pression est envoyée d'un côté du piston sensiblement en butée dans le corps de manière que le disque axialement mobile 76 soit dans une première position active et présente une première face en contact avec le disque fixe 72 solidaire du premier arbre primaire 36 ;
- une seconde position active (figure 5) dans laquelle la pression est envoyée d'un autre côté du piston sensiblement en butée dans le corps de manière que le disque axialement mobile 76 soit dans une seconde position active et présente sa seconde face en contact avec le disque fixe 74 solidaire du second arbre primaire 38.

Des moyens de pilotage non représentés, tels qu'un calculateur, commandent le fonctionnement automatique de la boîte de vitesses 14 en commandant le distributeur de l'actionneur 80, le déplacement des manchons à crabot 67, 68, 69 et le double embrayage 16.

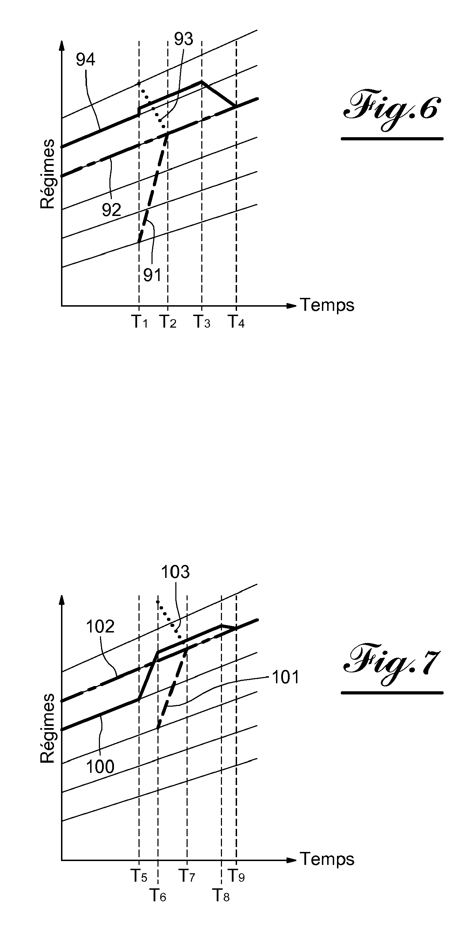

Le fonctionnement de l'ensemble de transmission comportant la boîte de vitesses 14 et son double embrayage 16, tout comme le fonctionnement du groupe motopropulseur 10 ressort déjà en partie de la description qui précède et va maintenant être détaillé en relation avec les figures 6 et 7.

De manière générale, l'arbre primaire qui n'est pas sous couple, c'est-à-dire l'arbre primaire qui n'est pas accouplé au moteur par l'intermédiaire de l'embrayage qui lui est associé, est synchronisé sur un régime cible, ou vitesse de rotation cible, en faisant frotter l'embrayage qui lui est associé si son régime cible est au dessus de son régime courant, c'est-à-dire ici le régime de l'arbre primaire à l'instant initial du changement de rapport, et en faisant frotter le frein si son régime cible est en dessous du régime courant de l'arbre primaire considéré et si la traînée de la boîte n'est pas suffisante pour freiner l'arbre primaire considéré, c'est-à-dire si les frottements internes de la boîte de vitesses ne sont pas suffisants pour freiner l'arbre primaire considéré.

Les séquences de changement de rapport sont détaillées ci-dessous dans les trois cas de figure pouvant intervenir dans lors d'un changement montant de rapport, par exemple le passage du deuxième rapport au troisième rapport comme représenté à la figure 6, et dans lors d'un changement descendant de rapport, par exemple le passage du troisième rapport au deuxième rapport comme représenté à la figure 7.

Avant un changement montant du deuxième rapport au troisième rapport comme représenté à la figure 6, c'est-à-dire avant l'instant T1, le manchon 68 est en position accouplée au pignon 62 et l'embrayage 26 associé au premier arbre primaire 36 portant le pignon 42 est fermé puisque l'ensemble de transmission doit transmettre du couple pendant le roulage sur le deuxième rapport. L'embrayage 28 associé au second arbre primaire 38 est ouvert alors que les manchons à crabots 67 et 69 des rapports impairs de la boîte sont en position découplée par rapport aux pignons 61, 63 et 65.

A partir de l'instant initial T1 de début de changement de rapport, trois cas distincts sont à envisager pour la synchronisation du régime, ou vitesse de rotation, du second arbre primaire 38 par rapport à celui de l'arbre secondaire 58 en tenant compte de la démultiplication du rapport à engager.

En effet, il faut une synchronisation de l'ensemble des pièces repérées 51, 53, 55, 61, 63, 65 et 38 de sorte que le pignon 63 soit au bon régime cible car le pignon 53 porté par le second arbre primaire 38 est engrené avec le pignon 63 dont la vitesse de rotation doit être compatible avec celle du manchon à crabots 67 tournant avec l'arbre secondaire 58. Du fait que le rapport de deuxième rapport est engagé, le régime de l'arbre secondaire 58 est fixé par le régime du premier arbre primaire 36 et par la démultiplication du deuxième rapport. Pour permettre la synchronisation et le crabotage, le régime du second arbre primaire 38 doit être conforme à un régime cible qui est dépendant de la vitesse du véhicule et du régime initial du moteur à l'instant T1 de début de changement de rapport compte tenu de la démultiplication du rapport initial et qui est déterminé en fonction de la démultiplication du rapport à engager, ici le troisième rapport de la boîte de vitesses, et de la vitesse que le véhicule est censé avoir à la fin du changement de rapport.

Dans le premier cas, schématisé par la courbe 91 à la figure 6, le régime du second arbre primaire 38 est en dessous du régime cible et il faut faire glisser ou patiner ou frotter l'embrayage 28 associé au second arbre primaire 38 pour accélérer le pignon fou 63 jusqu'à ce qu'il atteigne, à l'instant T2 (figure 6), un régime permettant le crabotage du manchon à crabots 67 et du pignon 63 compte tenu du rapport de démultiplication. Pendant une période dite de croisement des embrayages entre les instants T2 et T3, l'embrayage 26 associé au premier arbre primaire 36 est commandé en ouverture alors que le manchon à crabot 68 est mis en position découplée et que l'embrayage 28 associé au second arbre primaire 38 est commandé à fermeture. Dans ce cas, l'engagement du rapport cible, ici le troisième rapport, peut être anticipé, c'est-à-dire que le crabotage du manchon à crabots 67 et du pignon 63 est effectué avant l'instant T2 et non entre les instants T2 et T3. Pendant ce changement de rapport, le frein 70 est inactif, c'est-à-dire en position neutre avec son disque axialement mobile 76 placé entre les disques fixes 72 et 74. Après l'instant T4, l'embrayage 26 associé au premier arbre primaire 36 peut être fermé du fait que le manchon à crabot 68 est en position découplée.

Dans le deuxième cas, schématisé par la courbe 92 à la figure 6, le régime du second arbre primaire 38 à l'instant T1 est proche du régime cible. Le crabotage du manchon à crabots 67 et du pignon 63 peut alors être effectué entre l'instant T1 et l'instant T2, alors que l'embrayage 26 associé au premier arbre primaire 36 est fermé, que l'embrayage 28 associé au second arbre primaire 28 est ouvert et que le frein 70 est inactif. Après ledit crabotage, entre les instants T2 et T3, d'une part l'embrayage 26 associé au premier arbre primaire 36 est ouvert alors que le manchon à crabot 68 est mis en position découplé et d'autre part l'embrayage 28 associé au second arbre primaire 28 est fermé. Comme dans le cas précédent, après l'instant T4, l'embrayage 26 associé au premier arbre primaire 36 peut être fermé du fait que le manchon à crabot 68 est en position découplée.

Dans le troisième cas, schématisé par la courbe 93 à la figure 6, le régime du second arbre primaire 38 à l'instant T1 est en dessus du régime cible. Il faut que l'embrayage 28 associé au second arbre primaire soit ouvert et il faut faire glisser ou patiner ou frotter le frein 70 par action du disque 76 sur le disque 74 associé au second arbre primaire 38 pour freiner le pignon fou 63 jusqu'à ce qu'il atteigne, à l'instant T2, un régime permettant le crabotage compte tenu du rapport de démultiplication. Le temps de freinage est très bref. Le crabotage du manchon à crabots 67 et du pignon 63 étant effectué, dès l'instant T2, l'embrayage 26 associé au premier arbre primaire 36 peut être ouvert alors que le manchon à crabot 68 est mis en position découplée. Pendant la période dite de croisement des embrayages entre les instants T2 et T3, l'embrayage 28 associé au second arbre primaire 38 peut être fermé et le frein 70 est rendu inactif. Comme dans les cas précédents, après l'instant T4, l'embrayage 26 associé au premier arbre primaire 36 peut être fermé du fait que le manchon à crabot 68 est en position découplée.

La courbe 94 de la figure 6 représente le régime moteur qui, afin de garantir une discrétion maximale du passage de rapport, continue a augmenter par maintien de son accélération dans une phase d'accélération du véhicule pendant le changement montant de rapport et qui baisse à la fin du changent de rapport, entre des instants T3 et T4.

Avant un changement descendant du troisième rapport au deuxième rapport comme représenté à la figure 7, c'est-à-dire avant l'instant T5, le manchon 67 est en position accouplée au pignon 63 et l'embrayage 28 associé au second arbre primaire 38 portant le pignon 53 est fermé puisque l'ensemble de transmission doit transmettre du couple pendant le roulage sur le troisième rapport. Le manchon 69 associé au pignon 65 est bien entendu en position découplée. L'embrayage 26 associé au premier arbre primaire 36 est fermé alors que le manchon à crabots 68 des rapports pairs de la boîte est en position découplée par rapport aux pignons 62 et 64.

A partir de l'instant T5 de début de changement de rapport, trois cas distincts sont à envisager pour la synchronisation du régime du premier arbre primaire 36 par rapport à celui de l'arbre secondaire 58 en tenant compte de la démultiplication du rapport à engager.

En effet, il faut une synchronisation de l'ensemble des pièces repérées 42, 44, 62, 64 et 36 de sorte que le pignon 62 soit au bon régime cible car le pignon 42 porté par le premier arbre primaire 36 est engrené avec le pignon 62 dont la vitesse de rotation doit être compatible avec celle du manchon à crabots 68 tournant avec l'arbre secondaire 58, le régime de l'arbre secondaire 58 étant fixé par le régime du second arbre primaire 38 et par la démultiplication du troisième rapport du fait que le rapport de troisième rapport est engagé. Pour permettre la synchronisation et le crabotage, le régime du premier arbre primaire 36 doit être conforme au régime cible qui est dépendant de la vitesse du véhicule et du régime initial du moteur à l'instant T5 de début de changement de rapport compte tenu de la démultiplication du rapport initial et qui est déterminé en fonction de la démultiplication du rapport à engager, ici le deuxième rapport de la boîte de vitesses, et de la vitesse que le véhicule est censé avoir à la fin du changement de rapport.

Afin de garantir une discrétion maximale du passage de rapport, les deux embrayages 26 et 28 du double embrayage 16 sont passés à l'état ouvert ou débrayé entre les instants T5 et T6 pour découpler le moteur de la boîte de vitesses et, comme représenté sur la courbe 100 du régime moteur de la figure 7, le régime moteur est augmenté à un régime dit accéléré dans un premier intervalle de temps entre les instants T5 et T6, puis le moteur est maintenu accéléré pour avoir son régime cible à la fin du changement de rapport.

Dans le premier cas, schématisé par la courbe 101 à la figure 7, le régime du premier arbre primaire 36 est en dessous du régime cible et après l'instant T6, il faut faire glisser l'embrayage 26 associé au premier arbre primaire 36 pour accélérer le pignon fou 62 jusqu'à ce qu'il atteigne, compte tenu de l'accélération du régime moteur à l'instant T6 et jusqu'à l'instant T7 (figure 7), un régime permettant le crabotage du manchon à crabots 68 et du pignon 62 compte tenu du rapport de démultiplication. Entre les instants T5 et T7, alors que l'embrayage 28 associé au second arbre primaire 38 est ouvert, le manchon à crabots 67 est découplé du pignon 63. A l'instant T7, le manchon à crabots 68 et le la pignon 62 sont accouplés. Entre les instants T7 et T8, l'embrayage 26 associé au premier arbre primaire 36 est fermé ou embrayé, et entre l'instant T8 et l'instant T9 de fin de changement de rapport, le régime moteur s'ajuste en fonction des inerties de la chaîne de traction et de la consigne de charge donnée au moteur pour avoir le régime cible. L'embrayage 28 associé au second arbre primaire 38 ne peut être refermé qu'après que manchon 67 du rapport initial soit en position découplée, sa fermeture étant par exemple actionnée entre les instants T8 et T9 pour éviter tout choc dans la boîte de vitesses. Pendant ce changement de rapport, le frein 70 est inactif.

Dans le deuxième cas, schématisé par la courbe 102 à la figure 7, le régime du premier arbre primaire 36 à l'instant initial T5 est proche du régime cible. Le crabotage du manchon à crabots 68 et du pignon 62 peut alors être effectué dès l'instant T6, alors que les embrayages sont ouverts, que le moteur est au régime accéléré proche du régime cible. Après le crabotage, le fonctionnement est conforme à celui du premier cas lorsque le crabotage est effectué, le frein étant inactif.

Dans le troisième cas, schématisé par la courbe 103 à la figure 7, le régime du premier arbre primaire 38 à l'instant initial T5 est en dessus du régime cible. Il faut ouvrir les embrayages 26 et 28 du double embrayage 16 pour qu'à l'instant T6, le moteur puisse au régime accéléré proche du régime cible. Il faut aussi faire glisser ou patiner ou frotter le frein 70 par action du disque 76 sur le disque 72 associé au premier arbre primaire 36 pour freiner le pignon fou 62 jusqu'à ce qu'il atteigne, à l'instant T7, un régime permettant le crabotage compte tenu du rapport de démultiplication. Après le crabotage, le fonctionnement est conforme à celui du premier cas lorsque le crabotage est effectué, le frein redevenu inactif.

Dans la boîte de vitesses selon l'invention, alors que le véhicule est à l'arrêt, pour engager le premier rapport de marche avant par crabotage du manchon 67 et du pignon 61, il faut que l'embrayage 28 soit ouvert ou débrayé et il faut actionner le frein 70 jusqu'à l'arrêt de la rotation du second arbre primaire 38, compte tenu que l'arbre secondaire 58 ne tourne pas du fait de l'immobilité du véhicule. Sur le même principe, il faut aussi débrayer l'embrayage 28 et actionner le frein vers le disque 74 pour engager le rapport de marche arrière comportant un pignon 108 solidaire de l'arbre primaire 38 et, non représentés, un pignon solidaire de l'arbre secondaire 58, un pignon interposé entre les pignons précédemment cités et un manchon à crabot.

La variante de frein représentée à la figure 2 diffère du mode de réalisation du frein représenté à la figure 1 par un étrier mobile 110 qui remplace le disque mobile 76. L'étrier 110 comporte un premier flasque 112 dont la face intérieure est prévue pour frotter sur le disque axialement fixe 72 et un deuxième flasque 114 dont la face intérieure est prévue pour frotter sur le disque axialement fixe 74. L'étrier 110 est solidaire de la tige 86 de l'actionneur 80 et se déplace axialement en fonction de la pression exercée d'un côté ou de l'autre du piston.

En variante non représentée, la boîte de vitesses selon l'invention comporte deux arbres secondaires au lieu d'un seul, pour permettre un encombrement de la boîte différent ou pour ajouter des rapports.

En variante non représentée, l'actionneur est une ventouse magnétique ou un actionneur électromagnétique linéaire au lieu d'être un actionneur hydraulique.

## Revendications

1. Ensemble de transmission pour véhicule, notamment pour véhicule automobile, comportant une boîte de vitesses pilotée (14), **caractérisée en ce qu'**elle comprend deux arbres primaires (36, 38) pouvant chacun être accouplé à un moteur (12) par l'intermédiaire d'un double embrayage (16) pourvu d'un premier embrayage (26, 28) pouvant accoupler l'un des arbres primaires (36, 38) au moteur (12) et d'un deuxième embrayage (26, 28) pouvant accoupler l'autre des arbres primaires (36, 38) au moteur (12), un arbre secondaire (58) prévu pour être lié à rotation à au moins une roue motrice du véhicule et une pluralité de paires de pignons engrenés (42, 62 ; 44, 64 ; 51, 61 ; 53, 63 ; 55, 65) déterminant chacune un rapport de démultiplication de marche avant et comportant chacune un premier pignon (42, 44, 51, 53, 55) solidaire de l'un des arbres primaire (36, 38) et un deuxième pignon (61, 62, 63, 64, 65) monté fou à rotation sur l'arbre secondaire (58), au moins un manchon à crabots (67, 68, 69) alternativement en position accouplée en liant en rotation un des deuxièmes pignons (61, 62, 63, 64, 65) et son arbre et en position découplée libre en rotation par rapport au deuxième pignon (61, 62, 63, 64, 65), un carter supportant les arbres à rotation et un frein (70 ; 110) qui est interposé entre le carter et les arbres primaires (36, 38) et qui peut occuper une position neutre dans laquelle un élément de friction (76 ; 112, 114) du frein relié au carter est libre en rotation par rapport aux arbres primaires (36, 38) et deux positions actives dans chacune desquelles le frein (70 ; 110) accouple l'un des arbres primaires (36, 38) au carter en freinant l'arbre primaire quand la vitesse de rotation de ce dernier doit être abaissée jusqu'à atteindre un régime cible de synchronisation pour synchroniser les vitesses de rotation de l'arbre primaire (36, 38) et de l'arbre secondaire (58) d'un rapport à engager et permettre le passage du manchon à crabots (67, 68, 69) de sa position découplée à sa position accouplée en ajustant la vitesse de rotation du deuxième pignon (61, 62, 63, 64, 65) du rapport à engager et la vitesse de rotation du manchon à crabots (67, 68, 69) à accoupler.
**caractérisé en ce que** l'élément de friction (76 ; 112, 114) est relié au carter par l'intermédiaire d'un actionneur (80) à trois positions et **en ce que** le frein (70 ; 110) comprend un organe de friction (72, 74) solidaire de chacun des arbres primaires (36, 38), l'actionneur positionnant l'élément de friction (76 ; 112, 114) libre en rotation par rapport aux organes de friction (72, 74) en position neutre du frein et positionnant l'élément de friction (76 ; 112, 114) en contact de l'un des organes de friction (72, 74) dans chacune des positions actives du frein.

2. Ensemble de transmission selon la revendication précédente, **caractérisé en ce que** l'un des arbres primaires (36, 38) est associé aux pignons des rapports pairs (42, 44) de la boîte de vitesses (14) et l'autre des arbres primaires est associé aux pignons des rapports impairs (51, 53, 55) de la boîte de vitesses.

3. Ensemble de transmission selon l'une des revendications précédentes, **caractérisé en ce que** le premier embrayage (26, 28) est apte , dans une position fermée, à accoupler l'un des arbres primaires (36, 38) au moteur (12) et, **en ce que** le second embrayage (26, 28) est apte, dans une position fermée, à accoupler l'autre des arbres primaires (36, 38) au moteur (12) ; chacun des embrayages (26, 28), étant apte à découpler, dans une position ouverte, le moteur et l'arbre primaire qui lui est associé, en étant apte à occuper une position de frottement dans laquelle l'embrayage est partiellement fermé et, en étant apte, à un même instant, à être dans une position différente de celle l'autre des embrayages.

4. Ensemble de transmission selon l'une des revendications précédentes, **caractérisé en ce** chaque embrayage (26, 28) du double embrayage (16) est apte à prendre les positions suivante :
- une position fermée dans laquelle la vitesse de rotation d'un disque de l'embrayage (26, 28) est identique au régime du moteur (12),
- une position ouverte dans laquelle la rotation du disque de l'embrayage (26, 28) est rendue indépendante du régime du moteur (12),
- une position de frottement dans laquelle une variation de la vitesse de rotation du disque de l'embrayage (26, 28) et de l'arbre primaire (36, 38) associé à l'embrayage (26, 28) est permise, en fonction du régime du moteur (12) alors que les manchons à crabots (67, 68, 69) des deuxièmes pignons (61, 62, 63, 64, 64) engrenés avec les premiers pignons (42, 44, 51, 53, 55) dudit arbre primaire (36, 38) sont en position découplée.

5. Procédé de contrôle d'un ensemble de transmission selon l'une des revendication 1 à 4, dans lequel une opération de synchronisation est effectuée lors d'un changement de rapport de démultiplication en ajustant la vitesse de rotation de l'arbre primaire (36, 38) portant le premier pignon (42, 44, 51, 53, 55) de la paire de pignons du rapport à engager afin que la vitesse de rotation du deuxième pignon (61, 62, 63, 64, 64) du rapport à engager corresponde avec la vitesse de rotation du manchon à crabots (67, 68, 69) du rapport à engager, le procédé comportant :
- une étape de détermination d'un régime cible de l'arbre primaire (36, 38) portant le premier pignon de la paire de pignon du rapport à engager compte tenu de la vitesse du véhicule et de la démultiplication de la paire de pignons du rapport à engager,
- une étape de freinage dans laquelle, si le régime initial de l'arbre primaire (36, 38) portant le premier pignon (42, 44, 51, 53, 55) de la paire de pignon du rapport à engager est supérieur au régime cible, l'arbre primaire portant le premier pignon de la paire de pignon du rapport à engager est freiné jusqu'au régime cible par la mise en position active du frein (70 ; 110) en accouplant ledit arbre primaire avec le carter de la boîte de vitesses alors que l'embrayage (26, 28) associé audit arbre primaire est ouvert,
- une étape de frottement d'embrayage dans laquelle, si le régime initial de l'arbre primaire (36, 38) portant le premier pignon (42, 44, 51, 53, 55) de la paire de pignon du rapport à engager est inférieur au régime cible, l'embrayage (36, 28) associé à l'arbre primaire portant le premier pignon de la paire de pignon du rapport à engager est mis en position de frottement jusqu'à ce que ledit arbre primaire atteigne le régime cible, alors que le frein (70 ; 110) est inactif.

6. Procédé selon la revendication précédente, comportant une étape de crabotage direct du manchon à crabots (67, 68, 69) et du deuxième pignon (61, 62, 63, 64, 64) du rapport à engager si le régime initial de l'arbre primaire (36, 38) portant le premier pignon de la paire de pignon du rapport à engager est sensiblement égal au régime cible, alors que l'embrayage associé à l'arbre primaire portant le premier pignon (42, 44, 51, 53, 55) de la paire de pignon du rapport initial est fermé, que le frein (70 ; 110) est inactif et que l'embrayage (26, 28) associé à l'arbre primaire portant le premier pignon du rapport à engager est ouvert.

7. Procédé selon la revendication 5, comportant un crabotage du manchon à crabots (67, 68, 69) et du deuxième pignon (61, 62, 63, 64, 64) du rapport à engager à la fin de l'étape de freinage et à la fin de l'étape de frottement d'embrayage.

8. Procédé selon l'une quelconque des revendications 6 à 7, comportant, après le crabotage, une étape dans laquelle l'embrayage associé à l'arbre primaire portant le premier pignon (42, 44, 51, 53, 55) de la paire de pignon du rapport initial est ouvert et l'embrayage (26, 28) associé à l'arbre primaire portant le premier pignon du rapport à engager est fermé.

9. Procédé selon l'une quelconque des revendications 5 à 7, comportant une accélération du régime du moteur (12) lors de l'étape de frottement dans le cas d'un changement de rapport consistant en un passage d'un rapport supérieur à un rapport inférieur.
